# EUROPEAN PATENT APPLICATION

(11) **EP 4 666 829 A1**
(43) Date of publication of application: **24.12.2025**
(21) Application number: 25177576.3
(22) Date of filing: 20.05.2025
(51) Int. Cl.: A01D 34/00, A01D 34/73, A01D 34/82

(54) **ROBOTIC LAWN MOWER AND A CUTTING DISC FOR A ROBOTIC LAWN MOWER**

(30) Priority: 20.06.2024 SE 2450682
(71) Applicant: Husqvarna AB, 561 82 Huskvarna (SE)
(72) Inventor: Ederfors, Lars, Huskvarna (SE)

(57) **Abstract**

The present disclosure relates to a robotic lawn mower 51, and a cutting disc 1 therefore. The cutting disc comprises at the center of the disc a shaft connector 3, for connecting the cutting disc 1 to a robotic mower driving shaft 53. At the periphery of the disc, a plurality of knife carrier arrangements 7 are provided, each being configured to carry a grass-cutting knife pivotally attached thereto. The cutting disc comprises at least partially along a path from the shaft connector 3 to a knife carrier arrangement 7 an elastomer material through its thickness with a Young's modulus lower than 0,1 GPa. This serves to dampen noise that can arise from the grass-cutting knives impacting thick material, and which can be amplified by the cutting disc.

## Description

### Technical field

The present disclosure relates to a lawn mower and a cutting disc for a robotic lawn mower or the like, the cutting disc comprising at the center of the disc a shaft connector, for connecting the cutting disc to a robotic mower driving shaft, and, at the periphery of the disc, a plurality of knife carrier arrangements, each being configured to carry a grass-cutting knife being pivotally attached thereto.

### Background

Such cutting discs are common in robotic lawn mowers, one example being described in WO-2021/225494-A1. The knifes at the periphery of the disc may easily be replaced when worn, and the disc together with the knives may be a relatively lightweight assembly.

Even though robotic lawnmowers in general are considered to produce less acoustic noise than legacy-type lawnmowers, mostly due to be electrically driven, in some cases the sound produced during operation of a robotic lawnmower may be considered disturbing. This may especially be the case when cutting thicker straws in a lawn, which may be common in the early lawn season.

One object of the present disclosure is therefore to provide a cutting disc that can contribute to a more silent robotic lawnmower or similar device.

### Summary

One object of the present disclosure is therefore to provide a cutting disc that allows a more silent operation of a robotic lawnmower or a similar device.

This object is achieved by a cutting disc as defined in claim 1. More particularly, in a cutting disc of the initially mentioned kind, the cutting disc comprises at least partially along a path from the shaft connector to a knife carrier arrangement an elastomer material through its thickness with a Young's Modulus lower than 0,1 GPa for small strain deformation.

Such arrangements have been shown to reduce noise by dampening impacts from the knives that can make the cutting disc rattle considerably.

The cutting disc may be produced by two-shot injection moulding including the elastomer and a stiffer plastic material.

Alternatively, the cutting disc may be formed entirely in the elastomer material.

If two-shot injection moulding is used, the elastomer may form a circular trace surrounding the shaft connector. This provides rotational symmetry, which may have advantageous dynamic properties.

Alternatively, the elastomer may form a trace surrounding the shaft connector and having a varying radial distance to the shaft connector.

An elastomer area may be formed surrounding each knife carrier arrangement. It is possible to let the elastomer area extend beyond the reach of the knife associated with the knife carrier arrangement.

A skid plate may be rotatably arranged on the cutting disc.

The present disclosure also considers a robotic lawn mower, comprising a cutting disc as outlined above.

### Detailed description

Fig 1 shows a robotic lawnmower.
Fig 2 is a perspective view of a cutting disc.
Fig 3 illustrates schematically a first version of a cutting disc according to the present disclosure.
Fig 4 similarly illustrates a second version of a cutting disc according to the present disclosure.
Fig 5 illustrates a third version of a cutting disc according to the present disclosure.
Fig 6 illustrates a fourth version of a cutting disc according to the present disclosure.

### Detailed description

The present disclosure relates to a cutting disc. Such cutting discs can be used in robotic lawnmowers but could also be used in walk-behind lawnmowers or trimmers, for instance. While the following description provides the example of robotic lawnmowers, the cutting disc is not limited to that use.

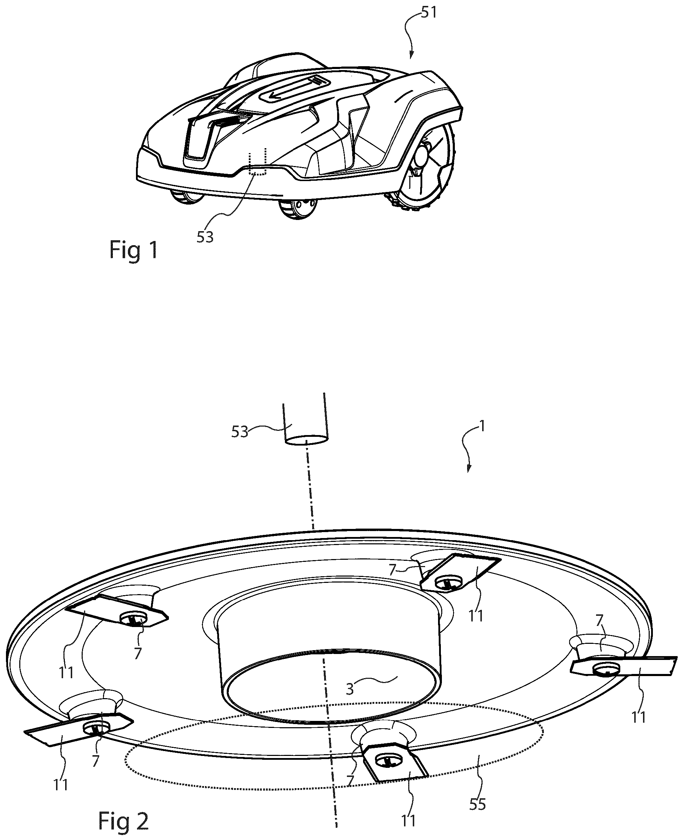

Fig 1 illustrates a robotic lawnmower 51. Such lawnmowers are well known by now, and are used to autonomously move around, cutting lawns in gardens while navigating a pre-defined work area therein and intermittently visiting a charging station.

Robotic lawnmowers 51 normally use electric motors both for autonomous driving and for cutting implement operation.

In many cases a cutting disc 1 is used, as illustrated in fig 2, showing components adapted to be used on the bottom side of a robotic lawnmower 51. The cutting disc 1 comprises at the center thereof a shaft connector 3, for connecting the cutting disc 1 to a robotic mower driving shaft 53 or the like. At the periphery of the cutting disc 1, there is provided a plurality of knife carrier arrangements 7. Each such knife carrier arrangement 7 is configured to carry a grass-cutting knife 11 pivotally attached thereto. Thanks to the pivoting function, the grass-cutting knife 11 is capable of yielding way if it hits a tough or hard object that cannot be cut, thereby avoiding that the grass-cutting knife 11 breaks.

The use of a cutting disc 1 of this type allows for a lightweight overall cutting implement that can be driven by a relatively low power electric motor. The cutting disc 1 can typically be made in a plastic material. The grass cutting knives 11 can be very light when compared with knives of legacy type walk-behind lawnmowers which may be driven by internal combustion engines. Such knives are unsuitable for autonomous, un-supervised operation, at least for safety reasons.

As initially mentioned, robotic lawnmowers 51, although generally being more silent than ICE-driven legacy-type lawnmowers, may be noisy in some cases, especially when processing thick grass. In the present disclosure, a cutting disc 1 providing a more silent operation of a robotic lawnmower is accomplished. This is done by providing the cutting disc 1 at least partially in an elastic material.

The cutting disc then 1 comprises, at least partially along a path from the shaft connector 3 to a knife carrier arrangement 7, an elastomer material. The elastomer material extends through the thickness of the cutting disc 1, from the top to the bottom face of the disc..

By an elastomer material is here considered a material with a Young's modulus lower than 0,1 GPa. A number of materials fulfil this requirement including thermoplastic polyurethanes, TPUs and other TPEs, thermoplastic elastomers.

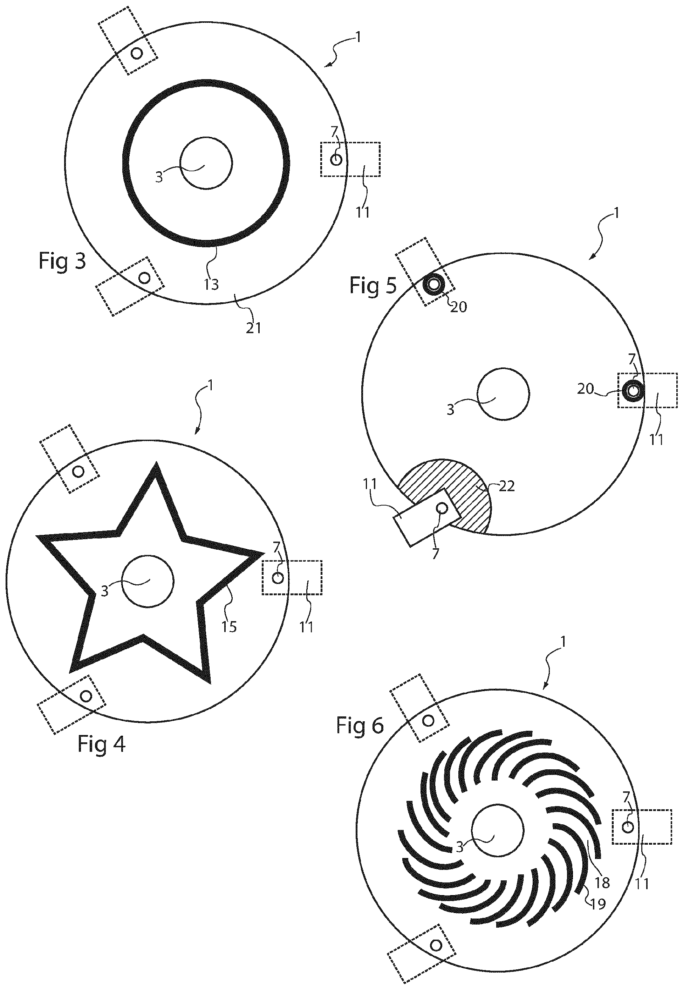

The cutting disc 1 may be devised in several different ways, as will be described in the following with reference to figs 3-6, schematically illustrating different examples. In all examples, the cutting disc 1 as mentioned has a central shaft connector 3, for connecting the cutting disc 1 to a robotic mower driving shaft 53 or the like, and a plurality of knife carrier arrangements 7 at the periphery of the cutting disc 1.

The shaft connector 3 may be configured in different ways, for instance providing a snap fit to a shaft or having means for attaching to the driving shaft 53 via a bolt, for instance.

The knife carrier arrangements 7 may also be devised in different ways, for instance as a bronze inlay being integral with the cutting disc by being inserted in the tool where the cutting disc 1 is formed by injection moulding a plastic material, for instance.

In a one example, the cutting disc 1 is made entirely from an elastomer material. However, to retain a sufficient overall rigidity of the cutting disc, it may be preferred to provide the cutting disc in two materials, where one is an elastomer, and the other is a plastic material which is less elastic. One typical combination may be using TPU as the elastomer material and PC-ABS (polycarbonate/acrylenitrilebutadienestyrene) as the stiffer plastic material.

Then, 2-component or 2-shot injection moulding, well known per se, is one useful way of producing the cutting disc 1. In a first example produced in this way, illustrated in fig 3, the elastomer forms a circular trace 13 surrounding the shaft connector 3, while the remainder 21 of the cutting disc 1 is formed in a stiffer material. One advantage with this approach is that the disc will be rotational symmetric to a great extent. In the illustrated case, the circular trace 13 is narrow and located more or less in the mid point between the center of the cutting disc 1 and the periphery thereof. This may be varied in different ways. The trace 13 may be located closer to the center of the cutting disc 1, or further towards the periphery of the disc. The width of the trace 13 may also be varied. For instance, one example is possible where the circular trace 13 takes up a wider band forming the periphery of the cutting disc 11 and enclosing the knife carrier arrangements 7. Several traces 13 may also be provided.

It is also possible as shown in fig 4 to provide an elastomer trace 15 surrounding the shaft connector 3 and having a varying radial distance to the shaft connector 3. In the shown example, the trace 15 is star-shaped, but other options are available. One advantage with this example is that for instance a braking of the periphery of the cutting disc 1 due to a knife 11 hitting an object is translated to the center thereof by stretching and compressing the material in the trace rather than as simple a shearing of the connection between the outer and inner parts of the cutting disc 1. This may more effectively dampen noise in some cases.

As shown in fig 5, it is also possible to form an elastomer trace 20, 22 surrounding each knife carrier arrangement 7. This dampens impacts from the knives 11 from being transferred to other parts of the disc to a large extent. As illustrated in the bottom portion of the disc in fig 5, the elastomer area 22 may extend beyond the reach of the knife 11 associated with the knife carrier arrangement 7. This dampens vibrations caused by the knife 11 itself hitting the disc 1. Needless to say, the areas around all knife carrier arrangements 7 would usually be arranged similarly, the exception in fig 5 being for illustrative purposes.

While in the examples shown in figs 3-5 all paths between the shaft connector 3 and each knife carrier 7 passes at least one elastomer portion, this is not strictly necessary to obtain a noise-dampening effect. For instance, as illustrated in fig 6 a similar effect can be obtained even if thin bridges 18 of stiffer plastic material in between paths 19 of elastic material is allowed as long as the disc 1 as a whole can deform elastically to some extent.

The discs 1 according to the above-described examples have the common benefit of dampening cymbal-like, noisy rattling of the disc 1 during operation. Further, the disc 1 will be more resilient to impacts due to knives 11 hitting tough objects, and also to some extent protect the driving shaft 53 and other components of the lawn mower from vibrations and impacts. It is possible to combine the configurations of figs 3-6 in different ways.

It should be noted that such a cutting disc operates well in combination with a skid plate 55, schematically indicated in fig 2, which is rotatably attached to the cutting disc 1 to avoid that the latter wears on grass in the center of the disc, which is not currently being cut by the knives. Such skid plates are well known per se.

The present disclosure is not restricted to the above described examples and may be varied and altered in different ways within the scope of the appended claims. For instance and as mentioned, the cutting disc may be used with other devices than robotic lawnmowers, for instance walk-behind lawnmowers or trimmers.

## Claims

1. Cutting disc (1) for a robotic lawn mower (51) or the like, the cutting disc comprising at the center of the disc a shaft connector (3), for connecting the cutting disc (1) to a robotic mower driving shaft (53) or the like, and, at the periphery of the disc, a plurality of knife carrier arrangements (7) each being configured to carry a grass-cutting knife (11) pivotally attached thereto, **characterized by** the cutting disc comprising, at least partially along a path from the shaft connector (3) to a knife carrier arrangement (7), an elastomer material through its thickness with a Young's modulus lower than 0,1 GPa.

2. Cutting disc according to claim 1, wherein the cutting disc (1) is produced by two-shot injection moulding including the elastomer and a stiffer plastic material.

3. Cutting disc according to claim 1, wherein the cutting disc (1) is formed entirely in the elastomer material.

4. Cutting disc according to claim 1 or 2, wherein the elastomer forms a circular trace (11) surrounding the shaft connector (3).

5. Cutting disc according to claim 1, 2 or 4, wherein the elastomer forms a trace (13) surrounding the shaft connector (3) and having a varying radial distance to the shaft connector (3).

6. Cutting disc according to claim 1, 2, 4 or 5, wherein an elastomer area (20, 22) is formed surrounding each knife carrier arrangement (7).

7. Cutting disc according to claim 6, wherein the elastomer area (22) extends beyond the reach of the knife (11) associated with the knife carrier arrangement (7).

8. Cutting disc according to any of the preceding claims, wherein a skid plate (15) is rotatably arranged on the cutting disc (1).

9. A robotic lawn mower (51), comprising a cutting disc (1) according to any of the preceding claims.
